# EUROPEAN PATENT APPLICATION

(11) **EP 4 763 332 A1**
(43) Date of publication of application: **24.06.2026**
(21) Application number: 24222404.6
(22) Date of filing: 20.12.2024
(51) Int. Cl.: B01J 29/72, B01D 53/94, B01J 37/00

(54) **A SELECTIVE CATALYTIC REDUCTION (SCR) CATALYST**

(71) Applicant: Johnson Matthey Public Limited Company, London EC2V 7AD (GB)
(72) Inventor: The designation of the inventor has not yet been filed
(74) Representative: Johnson Matthey Public Limited Company

(57) **Abstract**

The present invention provides a selective catalytic reduction (SCR) catalyst, for treating a gas mixture comprising NOx, the SCR catalyst comprising 50 to 90 wt% of a metal loaded zeolite and > 5 to 35 wt% of a binder in the form of titanium dioxide or silica-stabilised titanium dioxide.

## Description

### FIELD OF THE INVENTION

This invention relates to a selective catalytic reduction (SCR) catalyst, for treating a gas mixture comprising NOₓ, the SCR catalyst having improved strength and reliability.

### BACKGROUND TO THE INVENTION

Large numbers of catalytic converters used for the treatment of emissions from mobile and stationary sources are manufactured each year. Hydrocarbon combustion in diesel engines, stationary gas turbines, and other systems generates exhaust gas that must be treated to remove nitrogen oxides (NOₓ), which comprises NO (nitric oxide) and NO₂ (nitrogen dioxide), with NO being the majority of the NOₓ formed. NOₓ is known to cause a number of health issues in people as well as causing a number of detrimental environmental effects including the formation of smog and acid rain. To mitigate both the human and environmental impact from NOx in exhaust gas, it is desirable to eliminate these undesirable components, preferably by a process that does not generate other noxious or toxic substances.

The selective catalytic reduction of nitrogen oxides (NOₓ) by ammonia (NH₃-SCR) is considered to be the most practical and efficient technology for the abatement of NOₓ from exhaust gases emitted from stationary sources and mobile engines, principally lean-burn engines, such as diesel engines for vehicles. In an SCR process, a gaseous reductant, typically anhydrous ammonia, aqueous ammonia, or urea, is added to an exhaust gas stream prior to the exhaust gas contacting the catalyst. The reductant is absorbed onto the catalyst and the NOₓ is reduced as the gases pass through or over the catalyzed substrate.

Catalytic converters for use in motor-vehicles typically comprise a ceramic honeycomb monolith that is provided with channels for the through-flow of exhaust gases. The channels of the monolith may be coated with a catalytically active material (known as a "washcoat"). Alternatively, the extruded monolith itself is formed of a catalytically active material (referred to as an "all-active" extrudate or extruded catalyst).

To produce an all-active extruded catalyst, the catalytically active material is included in an extrusion composition whose rheological properties have been set so as to be suitable for the extrusion process. This extrusion composition is a plastic (i.e. easily shaped or mouldable), viscous composition. To set the desired rheological properties of the extrusion composition and also the mechanical properties of the extrudate, binders or additives are typically added to the extrusion composition. This plastic composition is then subjected to an extrusion process for preparing, for example, a honeycomb body. The so-called "green" body thus obtained is then subjected to a high temperature calcination treatment to form the finished extruded catalyst body.

Known SCR (selective catalytic reduction) catalysts include zeolites, in particular, metal loaded zeolites.

The use of silica-containing alumina binders in metal-loaded zeolite catalysts has been found to improve SCR performance. However, the present inventors have now found that the use of such binders in all-active extruded catalysts may have a detrimental impact on the catalyst's mechanical strength and structural integrity.

There is therefore a need for an SCR catalyst that has increased mechanical strength while maintaining good performance.

The inventors have surprisingly found that the use of titanium dioxide or silica-stabilised titanium dioxide as a binder in an SCR catalyst provide improved mechanical strength without detrimentally impacting performance.

### SUMMARY OF THE INVENTION

According to the present invention there is provided a selective reduction catalyst (SCR) for treating a gas mixture comprising NOₓ, the SCR catalyst comprising 50wt% to 90wt% of a metal loaded zeolite and >5wt% to 35wt% of a binder in the form of titanium dioxide or silica-stabilised titanium dioxide.

The metal-loaded zeolite may comprise a small pore zeolite (e.g. a zeolite having a maximum ring size of eight tetrahedral atoms), a medium pore zeolite (e.g. a zeolite having a maximum ring size of ten tetrahedral atoms) or a large pore zeolite (e.g. a zeolite having a maximum ring size of twelve tetrahedral atoms) or a combination of two or more thereof. When the zeolite is a small pore zeolite, then the small pore zeolite may have a framework structure represented by a Framework Type Code (FTC) selected from the group consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, LTA, KFI, MER, MON, NSI, OWE, PAU, PHI, RHO, RTH, SAT, SAV, SFW, SIV, THO, TSC, UEI, UFI, VNI, YUG and ZON, or a mixture and/or an intergrowth of two or more thereof. Preferably, the small pore zeolite has a framework structure selected from the group consisting of CHA, LEV, AEI, AFX, ERI, LTA, SFW, KFI, DDR and ITE.

When the zeolite is a medium pore zeolite, then the medium pore zeolite may have a framework structure represented by a Framework Type Code (FTC) selected from the group consisting of AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, -PAR, PCR, PON, PUN, RRO, RSN, SFF, SFG, STF, STI, STT, STW, -SVR, SZR, TER, TON, TUN, UOS, VSV, WEI and WEN, or a mixture and/or an intergrowth of two or more thereof. Preferably, the medium pore zeolite has a framework structure selected from the group consisting of FER, MEL, MFI, and STT.

When the zeolite is a large pore zeolite, then the large pore zeolite may have a framework structure represented by a Framework Type Code (FTC) selected from the group consisting of AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, -RON, RWY, SAF, SAO, SBE, SBS, SBT, SEW, SFE, SFO, SFS, SFV, SOF, SOS, STO, SSF, SSY, USI, UWY, and VET, or a mixture and/or an intergrowth of two or more thereof. Preferably, the large pore zeolite has a framework structure selected from the group consisting of AFI, BEA, MAZ, MOR, and OFF.

In an embodiment of the invention, the metal-loaded zeolite has a framework type selected from AEI, AFT, AFX, CHA, DDR, ERI, ITE, KFI, LEV, LTA, SFW, BEA, MFI, FER, RHO and mixtures and/or intergrowths thereof. In a preferred form of the invention, the framework type is selected from CHA, AEI or AFX, LTA or ERI, most preferably it is selected from CHA or AEI.

Small and medium pore zeolites, especially small pore zeolites, are preferred for use in SCR catalysts, since they may, for example, provide improved SCR performance and/or improved hydrocarbon tolerance. In a preferred form of the invention, the zeolite may be a small pore zeolite, e.g. CHA or AEI.

The zeolite of the present invention is a metal loaded zeolite. Examples of metal-loaded zeolites include iron-, copper- and palladium-loaded zeolites. In a preferred embodiment, the metal loaded zeolite has a metal selected from the group comprising cobalt, copper, iron, cerium, manganese, nickel, palladium, platinum, ruthenium and rhenium. In a particularly preferred embodiment, the metal is selected from Cu, Fe, V, Ce and Mn. In a most preferred embodiment, the metal is copper or iron, preferably copper. An advantage of using copper loaded zeolites is that such formulations have excellent low temperature NOₓ reduction activity (e.g. it may be superior to the low temperature NOₓ reduction activity of an iron exchanged zeolite). In a metal-loaded zeolite, the loaded metal is a type of "extra-framework metal", that is, a metal that resides within the zeolite and/or on at least a portion of the zeolite surface and does not include atoms constituting the framework of the zeolite.

In an embodiment of the invention the metal loaded zeolite is an ion-exchanged metal loaded zeolite with a metal selected from the group consisting of copper, manganese, nickel, cobalt, iron, palladium, platinum, cerium, yttrium, niobium, lanthanum, zinc, calcium, magnesium or any mixture of two or more thereof.

Preferably, the metal loaded zeolite is a Cu-loaded or Fe-loaded zeolite. More preferably, the metal loaded zeolite is Cu-CHA or a Cu-AEI. In an embodiment of the invention, the Cu content of the Cu-loaded zeolite is in the range 2wt% to 5wt% based on the weight of the Cu-zeolite.

The metal loaded zeolite may have a silica-to-alumina ratio (SAR) of 5 to 200, preferably 5 to 100, more preferably 10 to 80, or, for example 5 to 30.

The SCR catalyst may be provided on or within a substrate. The term "provided on or within" as used herein may encompass that the SCR catalyst is disposed on a substrate and/or that the SCR catalyst is present in a substrate, such as in the form of an extruded catalyst formed from an extrudate comprising the SCR composition. The term "disposed on" as used herein may encompass either that the SCR catalyst is directly disposed on the substrate, i.e. with no intervening material, and/or indirectly disposed on the substrate, i.e. with intervening material. If the substrate is porous, then the term "disposed on" may also encompass having the catalytic composition disposed therein, for example within the pores of the substrate, i.e. wherein the catalytic composition is disposed thereon and/or therein, for example, as a washcoat.

Where the SCR catalyst is disposed on a substrate, the substrate may be a ceramic honeycomb monolith that is provided with channels for the through-flow of exhaust gases, such as exhaust gases comprising NOₓ. Where the SCR catalyst is disposed on a substrate, it may be applied to the substrate in the form of a washcoat. A washcoat typically comprises a liquid and catalytic material. The washcoat may take the form of a solution, slurry or suspension of catalytic material in a solvent. Once coated onto the substrate, the washcoat typically undergoes a calcination step, to remove solvent and to fix the catalytically active material to the substrate. Washcoating may be carried out according to well-known processes in the art.

Where the SCR catalyst is provided within a substrate, the active substrate may be prepared by including the SCR catalyst in a composition whose rheological properties have been set so as to be suitable for the extrusion process. This extrusion composition is a plastic (i.e. easily shaped or mouldable), viscous composition. To set the desired rheological properties of the extrusion composition and also the mechanical properties of the extrudate, binders or additives are typically added to the extrusion composition. This plastic composition is then subjected to an extrusion process for preparing, for example, a honeycomb body. The so-called "green" body thus obtained is then subjected to a high temperature calcination treatment to form the finished extruded catalyst body, which is referred to in the art as an "all active" catalyst or an "all active extruded" catalyst. Accordingly, and in a preferred form of the invention, the SCR catalyst is in the form of an all-active extruded catalyst.

According to an aspect of the invention the binder is in the form of silica-stabilised titania and the silica content of the silica-stabilised titania is in the range 1wt% to 20wt% by weight, preferably 2wt% to 15wt%, more preferably 3wt% to 10wt%, most preferably 3.5 to 7wt%.

Advantageously, it has been found that, where the SCR catalyst is in the form of an all-active extruded catalyst, the use of titania or silica-stabilised titania as a binder may provide improved mechanical strength. For example, where the SCR catalyst is an all active extruded catalyst, the SCR catalyst may have a mechanical strength greater than 35 N, preferably about 40 N (as measured by the three point bending test).

Where the SCR catalyst is an all active extruded catalyst, the SCR catalyst may comprise:
a. 50wt% to 90wt%, for example 55 to 90 wt%, 65 to 85 wt% or 70 to 80 wt%, of a metal-loaded zeolite;
b. >5wt% to 45wt%, for example 10 to 40 wt%, 10 to 35 wt%, 15 to 35 wt% or 15 to 25 wt%, of matrix component comprising the binder and optionally other additives; and
c. 0 to 10 wt%, for example 5-10 wt%, inorganic fibres.

In a preferred form of the invention the binder is present in the SCR catalyst in an amount in the range 5wt% to 35wt%, preferably 10 to 35 wt%, 10 to 30 wt%, 8wt% to 20wt% or8wt% to 15wt%.

The matrix component may further comprise other additives such as additional binders or fillers which may provide structural integrity and or porosity to the final solid catalyst body. For example, the matrix component may further comprise alumina and/or clay components.

The matrix component may further include inorganic fibres. Suitable inorganic fibres may be selected from the group consisting of carbon fibres, glass fibres, metal fibres, boron fibres, alumina fibres, silica fibres, silica-alumina fibres, silicon carbide fibres, potassium titanate fibres, aluminium borate fibres and ceramic fibres. Advantageously, inorganic fibres can improve the mechanical robustness of the calcined product.

Where the SCR catalyst is an all-active extruded catalyst, it may be configured as a flow through honeycomb monolith, wherein each channel is open at both ends and the channels extend through the entire axial length of the substrate.

The SCR catalyst of the invention may be used to treat an exhaust gas derived from a combustion process, such as from an internal combustion engine (whether mobile or stationary), a gas turbine or a power plant (such as a coal or oil-fired power plant). A preferred application for the SCR catalyst of the invention is in an exhaust system for an automotive vehicle. Thus, in a second aspect of the invention, there is provided a method of treating a NOₓ-containing exhaust gas comprising contacting a mixture of the exhaust gas and a nitrogen-containing reducing agent, such as ammonia, with a catalyst as described herein. In a further aspect, the invention provides the use of the catalyst of the first aspect for the selective catalytic reduction of nitrogen oxides in an exhaust gas.

The SCR catalyst may be part of an exhaust gas treatment system wherein the catalyst article is disposed downstream of a source of a nitrogenous reductant. Thus, according to a further aspect of the present invention, there is provided an exhaust system comprising: a source of nitrogenous reductant and an injector for injecting a nitrogenous reductant into a flowing exhaust gas, wherein the injector is disposed upstream from the SCR catalyst as defined herein. Preferably the upstream source of nitrogenous reductant is an ammonia or ammonia pre-cursor (e.g. urea) injector disposed upstream of the first SCR catalyst. The exhaust system may include a controller for metering the injection of nitrogenous reductant into the flowing exhaust gas. The exhaust system may include additional upstream and/or downstream components, such as additional catalytic components. For example, an oxidation catalyst (for example a diesel oxidation catalyst (DOC)) may be located upstream of the point of injecting the nitrogenous reductant into the exhaust gas and/or an ammonia slip catalyst (ASC) may be located downstream of the SCR catalyst.

According to a further aspect, there is provide a vehicle comprising an internal combustion engine and emission gas treatment system as defined above.

### BRIEF DESCRIPTION OF THE FIGURES

**Figure 1****:** shows NOₓ conversion achieved by catalysts according to the present invention and by a comparative catalyst.
**Figure 2****:** shows NOₓ conversion achieved by catalysts according to the present invention and by comparative catalysts.
**Figure 3****:** shows the bending strength (in Newtons) measured for catalysts according to the present invention and for comparative catalysts.

### DETAILED DESCRIPTION OF THE INVENTION

Aspects of the present invention will now be further described with reference to the following examples, which are illustrative, but not limiting of the invention. SCR catalysts were prepared according to the following procedures.

### Comparative Example A

The following components were used to prepare an SCR catalyst as a first comparative example: a H⁺-form CHA zeolite, copper carbonate (CuCO₃.Cu(OH)₂), cerium carbonate, clay minerals, powdered synthetic boehmite, powdered SiOz-doped boehmite (having a silica content of 5wt%) and glass fibres. These were combined and then admixed in an aqueous solution having an acidic pH with glycerol, a plasticizer component and a polyethylene oxide at room temperature to form a mouldable paste. The mouldable paste had a solids content of about 60wt%. The mouldable paste was extruded at 20°C into flow-through honeycomb samples having a circular cross-section of 1 inch diameter and a cell density of either 400 or 500 cpsi (cells per square inch). The extruded honeycombs were freeze dried for several hours at 2mbar according to the method described in WO 2009/080155 and then calcined at a temperature of 700°C in a lab scale muffle oven to form a solid catalyst body.

The quantitative proportions of the starting materials were selected such that final solid catalyst body contained 70% by weight of a copper-cerium-exchanged zeolite, 10.75% by weight of alumina, 9.5wt% SiO₂-doped alumina, 1.75wt% clay minerals and 8% by weight of glass fibres.

### Example 1

A solid catalyst body was prepared according to the method described for Comparative Example A, except that the SiO₂-doped boehmite was replaced by titanium dioxide (TiO₂).

### Example 2

A solid catalyst body was prepared according to the method described for Comparative Example A, except that the SiO₂-doped boehmite was replaced by silica-stabilised-TiOz having a silica content of about 4wt%.

### Comparative Example B

A solid catalyst body was prepared according to the method described for Comparative Example A, except that the SiO₂-doped boehmite was replaced by a 50:50 mix of titanium dioxide and diatomaceous earth.

### Catalyst testing

Identical volume samples (cell density = 500 cpsi) of Comparative Examples A and B and Examples 1 and 2 were tested in a synthetic catalytic activity test (SCAT) apparatus using the following inlet gas mixture at selected inlet gas temperatures: 300ppm NO (0% NO₂), 300ppm NH₃ (Ammonia to NOx ratio (ANR) = 1.0), 9.3% O₂, 7% H₂O, balance N₂, space velocity (SV) of 120000h⁻¹. The catalyst samples were tested both in a fresh condition and after hydrothermal ageing (10 vol.% H₂O for 50h at 750°C).

Identical volume samples (cell density = 400 cpsi) of Comparative Examples A and B and Examples 1 and 2 were also subjected to mechanical strength testing via the three-point bending test (using a Hegewald & Peschke Universal testing machine inspekt table blue 5kN, with the span of the lower supports set to 40mm).

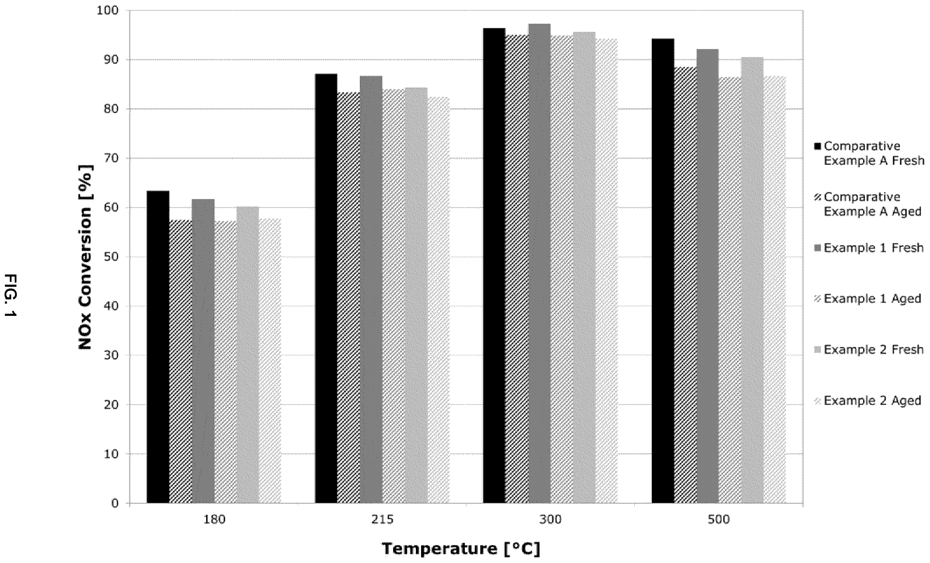

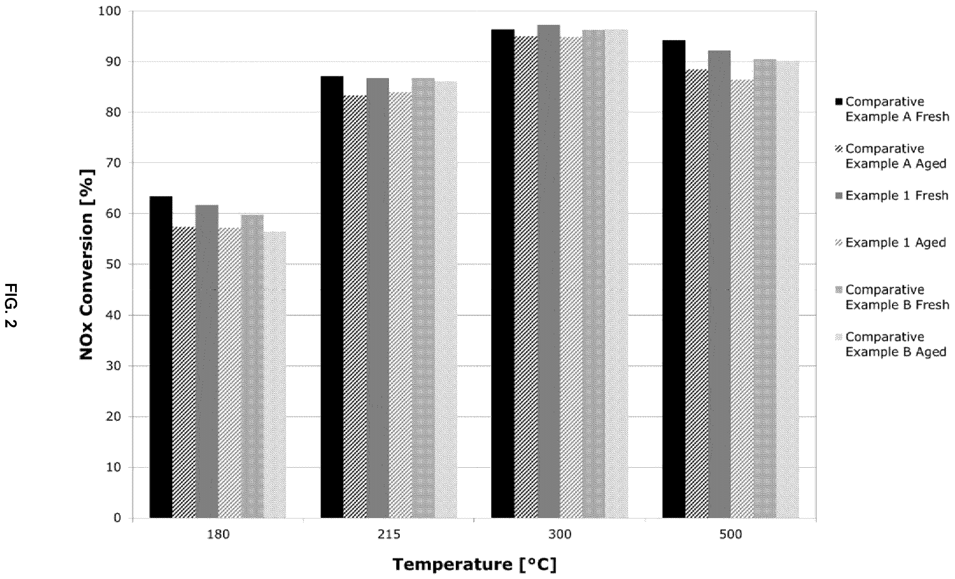

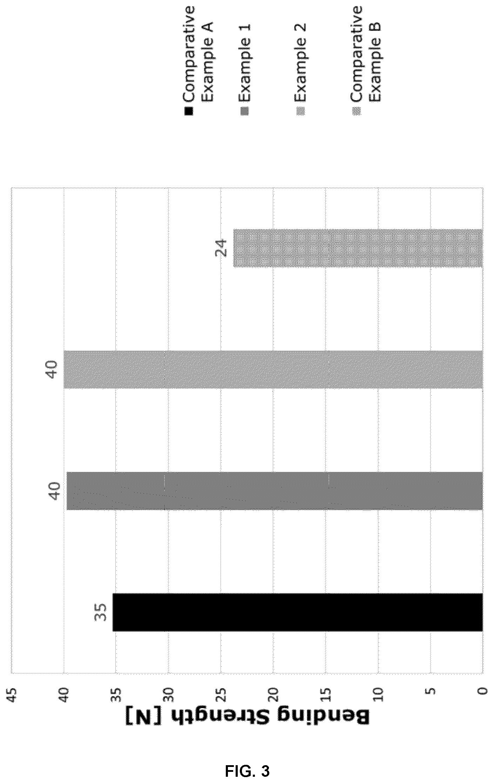

Figure 1 shows NOₓ conversion rates achieved by the samples of each of Comparative Example A and Examples 1 and 2 at the selected inlet temperature. Figure 2 shows NOₓ conversion rates achieved by the samples of each of Example 1 and Comparative Examples A & B at the selected inlet temperature. Figure 3 shows the Bending Strength (measured in Newtons) achieved by each sample.

As demonstrated by the data shown in the Figures, Examples 1 and 2 achieve similar performance compared to Comparative Example A but have increased mechanical strength. Further, comparison of Comparative Example B with Example 1 demonstrates that the quantity of titania/SiO₂-stabilised-tiania is important for achieving adequate mechanical strength.

## Claims

1. A selective catalytic reduction (SCR) catalyst, for treating a gas mixture comprising NOₓ, the SCR catalyst comprising 50 to 90 wt% of a metal loaded zeolite and > 5 to 35 wt% of a binder in the form of titanium dioxide or silica-stabilised titanium dioxide.

2. The SCR catalyst of claim 1 wherein the binder is in the form of silica-stabilised titania and the silica content of the silica-stabilised titania is in the range 1 to 20wt% by weight, preferably 2 to 15wt%, more preferably 3 to 10wt%, most preferably 3.5 to 7wt%.

3. The SCR catalyst of claim 1 or 2, wherein the metal-loaded zeolite is a zeolite which is ion-exchanged with a metal selected from the group consisting of copper, manganese, nickel, cobalt, iron, palladium, platinum, cerium, yttrium, niobium, lanthanum, zinc, calcium, magnesium or any mixture of two or more thereof.

4. The SCR catalyst of any preceding claim, wherein the metal loaded zeolite is a Cu-loaded or Fe-loaded zeolite.

5. The SCR catalyst as claimed in any preceding claim wherein the zeolite is a small pore zeolite.

6. The SCR catalyst of any preceding claim wherein the zeolite has a Framework Type selected from CHA, AEI or AFX, LTA or ERI, preferably selected from CHA or AEI.

7. The SCR catalyst of any preceding claim where in the metal loaded zeolite is Cu-CHA or a Cu-AEI.

8. A SCR catalyst as claimed in claim 78 wherein the Cu content of the Cu-loaded zeolite is in the range 2 to 5 wt% based on the weight of the Cu-zeolite.

9. A SCR catalyst as claimed in any preceding claim wherein the zeolite has a silica-to-alumina ratio (SAR) of 5 to 200, 5 to 100, 10 to 80, or 5 to 30.

10. The SCR catalyst of any preceding claim, wherein the SCR catalyst is in the form of an all-active extruded catalyst.

11. The SCR catalyst as claimed in claim 11, which comprises:
a. 50 to 90 wt% of the metal-loaded zeolite;
b. >5 to 45wt% of matrix component comprising the binder and optionally other additives;
d. 0 to 10 wt% inorganic fibres.

12. The SCR catalyst of claim 12 wherein the matrix component further comprises alumina and/or clay.

13. The SCR catalyst as claimed in any preceding claim wherein the binder is present in the SCR catalyst in an amount in the range 10 to 35wt%, preferably 10 to 30 wt%, more preferably 8 to 20wt%.

14. The SCR catalyst of any one of claims 1 to 10, wherein the SCR catalyst is in the form of a layer disposed on a substrate.

15. A method of treating a NOx-containing exhaust gas comprising contacting a mixture of the exhaust gas and a nitrogen-containing reducing agent with a SCR catalyst as claimed in any of claims 1 to 14.
